# EUROPEAN PATENT SPECIFICATION

(11) **EP 2 382 871 B1**
(45) Date of publication and mention of the grant of the patent: **05.08.2015**
(21) Application number: 09835116.6
(22) Date of filing: 24.12.2009
(51) Int. Cl.: A23L 1/227, A23L 2/56

(54) **METHOD FOR PRODUCING FLAVOR MATERIAL**
HERSTELLUNGSVERFAHREN FÜR EIN DUFTMATERIAL
PROCÉDÉ DE PRODUCTION DE MATIÈRE AROMATISÉE

(30) Priority: 25.12.2008 JP 2008329982
(43) Date of publication of application: 02.11.2011
(73) Proprietor: Ajinomoto Co., Inc., Tokyo 104-8315 (JP)
(72) Inventor: TAKAKURA, Yukiko, Kawasaki-shi Kanagawa 210-8681 (JP); HAYASHI, Kazuhiro, Kawasaki-shi Kanagawa 210-8681 (JP); IGA, Mayuko, Kawasaki-shi Kanagawa 210-8681 (JP); YAMADA, Makoto, Kawasaki-shi Kanagawa 210-8681 (JP); MASUZAWA, Takuya, Kawasaki-shi Kanagawa 210-8681 (JP)
(74) Representative: Strehl Schübel-Hopf & Partner
(86) International application number: PCT/JP2009/071876
(87) International publication number: WO 2010/074335

(56) References cited:
- EP-A2- 0 084 246
- WO-A1-2008/069173
- JP-A- 1 206 968
- JP-A- 2006 304 700
- MEYNIER A. ET AL.: 'The effect of pH on the formation of volatile compounds in meat- related model systems.' FOOD CHEM. vol. 52, no. 4, 1995, pages 361 - 366, XP008149230
- ARROYO P.T. ET AL.: 'Identification of carbonyl and sulfur compounds from nonenzymatic browning reactions of glucose and sulfur- containing amino acids.' J.FOOD SCI. vol. 35, no. 6, 1970, pages 769 - 770, XP008149182
- YU T. ET AL.: 'Volatile compounds generated from thermal reaction of methionine and methionine sulfoxide with or without glucose.' J.AGRIC.FOOD. CHEM. vol. 43, no. 6, 1995, pages 1641 - 1646, XP000508208
- WONG K.H. ET AL.: 'Sensory aroma from Maillard reaction of individual and combinations of amino acids with glucose in acidic conditions.' INT.J.FOOD SCI.TECH. vol. 3, no. 9, 04 September 2008, pages 1512 - 1519, XP008149180

## Description

### [Technical Field]

The present invention relates to methods of producing a flavor composition by utilizing a heating reaction of methionine and a sugar, which enables to contain methional at a higher concentration.

### [Background Art]

Maillard reaction, which is a heating reaction of amino acid and a sugar, is known to produce various flavor compounds such as roast smell, meat-like smell, and the like, and is utilized in a number of cases in recent years for producing flavors and seasonings and imparting smell to foods (see patent document 1).

Among them, methional which is a main flavor component produced by a Maillard reaction of methionine and a sugar (see non-patent documents 1, 2) has recently been known as a flavor component for steamed potato and meat, thus acquiring higher importance.

On the other hand, since Maillard reaction requires complicated reaction steps, it is difficult to obtain only a necessary flavor compound at a high purity. In some reports, however, an attempt has been made to promote the reaction, as shown in non-patent document 3.

### [Document List]

### [patent document]

[patent document 1] JP-A-01-206968

### [non-patent documents]

[non-patent document 1] J. Agric. Food Chem., 47, 2355, 1999
[non-patent document 2] J. Agric. Food Chem., 43, 1641, 1995
[non-patent document 3] J. Agric. Food Chem., 52, 953, 2004

### [SUMMARY OF THE INVENTION]

### [Problems to be Solved by the Invention]

In the production methods shown in the invention of the aforementioned patent document 1 and non-patent documents 1, 2, however, the components were identified but not quantified, and they pose a problem from the aspect of practical use since the methional content is low. Moreover, as indicated in non-patent document 3, phosphate has been known to catalyze production of dicarbonyl compounds by promoting sugar decomposition; however, application thereof to a heating reaction system of methionine and a method of promoting production of Strecker aldehyde such as methional and the like by causing Strecker degradation have not been known.

Under the above-mentioned background, the present invention aims to provide a method of producing a flavor composition by utilizing a heating reaction of methionine and a sugar, which enables to contain methional at a higher concentration, and a food etc. containing a composition produced by the production method.

### [Means of Solving the Problems]

The present inventors have conducted intensive studies in an attempt to solve the above-mentioned problems and completed the present invention. The present invention encompasses the following inventions.
[1] A method of producing a flavor composition, comprising mixing methionine, a sugar and one or more substances selected from sodium chloride, potassium chloride, calcium chloride and sodium dihydrogen phosphate, and heating the mixture at not lower than 40°C and not higher than 180°C for not less than 15 min and within 10 hr at a pH of not less than 3 and not more than 8.
[2] The production method described in [1] above, wherein the sugar is selected from the group consisting of glucose, xylose, sucrose, maltose and fructose.
[3] A method of producing a flavor composition, comprising mixing methionine, a sugar and one or more substances selected from sodium chloride, potassium chloride, calcium chloride and sodium dihydrogen phosphate, and heating the mixture in two stages, wherein the mixture is heated in a first stage at not lower than 40°C and not higher than 180°C for not less than 15 min and not more than 10 hr at a pH of not less than 4.0 and not more than 8.0, and in a second stage at not lower than 40°C and not higher than 180°C for not less than 15 min and not more than 10 hr at a pH of not less than 3.0 and not more than 7.0, and the pH in the first stage is different from the pH in the second stage by not less than 0.5.
[4] A method of producing a food, comprising adding a flavor composition obtained by the production method described in any one of [1] to [3] above to a food.
[5] The method described in [4] above, wherein the food is food or drink using a meat extract.

### [Effect of the Invention]

The present invention can provide a method of producing a flavor composition by utilizing a heating reaction of methionine and a sugar, which enables to contain methional at a higher concentration.

### [Description of Embodiments]

The flavor composition in the present invention is characterized in that pH is adjusted in two stages during heating of methionine and a sugar.

The pH to be adjusted in two stages during heating of methionine and a sugar is not less than 4.0 and not more than 8.0 in the first stage and not less than 3.0 and not more than 7.0 in the second stage. More preferably, the pH in the first stage is not less than 6.0 and not more than 8.0, the pH in the second stage is not less than 3.0 and not more than 6.0, still more preferably, the pH in the first stage is not less than 6.5 and not more than 8.0, and the pH in the second stage is not less than 3.0 and not more than 5.5. In addition, pH conditions of the pH in the first stage being different from the pH in the second stage by not less than 0.5 are characteristically employed. As the pH deviates from the ranges, the production amount of methional unpreferably decreases.

Moreover, the temperature during heating is characteristically not lower than 40°C and not higher than 180°C, and heating is performed for not less than 15 min and not more than 10 hr, more preferably the temperature is not lower than 70°C and not higher than 120°C, and the heating time is not less than 1 hr and not more than 8 hr. As the heating temperature becomes lower and the heating time becomes shorter, the production amount of a flavor composition unpreferably decreases. As the heating temperature becomes higher and the heating time becomes longer, unpreferable flavors such as burning smell and the like increase.

In the present invention, while the method of adjusting pH is not particularly limited as long as it uses an adjustor used for foods, hydrochloric acid, phosphoric acid, citric acid, formic acid, acetic acid, sodium hydroxide, potassium hydroxide, aqueous ammonia and the like are preferable from the aspect of distribution.

Moreover, one or more substances selected from sodium chloride, potassium chloride, calcium chloride and sodium dihydrogen phosphate is/are characteristically contained during heating methionine and a sugar. More preferably, the effect of sodium chloride, potassium chloride and sodium dihydrogen phosphate is particularly high.

In the present invention, the flavor composition means those produced by reacting methionine and a sugar at particular pH and temperature.

The flavor in the context of the present invention refers to any of smell, flavor and taste.

While methionine as an amino acid includes a D form and an L form, the effect in the present invention does not change by using either or a mixture (racemate) thereof.

The sugar used in the present invention refers to any saccharide such as monosaccharide, disaccharide, polysaccharide and the like, and glucose, xylose, sucrose, maltose and fructose are preferable from the aspect of reaction efficiency.

As the starting material of the flavor composition to be used in the present invention, those of various derivation such as synthesized product, fermented product and the like can be used as long as they are usable for food and drink. When such flavor composition is used for food, the form of use is not particularly limited, and direct addition, dilution with water, a solvent and the like, mixing of a yeast extract, meat extract, seafood extract, protein hydrolysate and the like with a seasoning composition, stewing of meat and the like, and the like can be employed.

In addition, the form of the flavor composition in the present invention is not particularly limited and, for example, it can be utilized in the form of a dry powder, a paste, a solution and the like.

Moreover, the food to which a flavor composition is added in the present invention is not particularly limited, and a more remarkable effect is afforded in food and drink using a meat extract, particularly chicken extract, beef extract or pork extract. Specifically, European food such as chicken consomme soup, curry, beef stew, white stew, ham, hamburger, steak and the like, Chinese food, Japanese-style food, various seasonings such as worcester sauce, demi-glace sauce, ketchup, various sauces and flavor seasonings and the like, Japanese-style boiled foods such as simmered meat and potatoes, chicken stew with taro, carrot, burdock, etc., and the like, fried foods such as fried chicken, pork cutlet and the like, and rice such as rice ball, pilaf and the like are preferable. As for the concentration of the composition to be added to food, various concentrations of from not less than 1 ppb to not more than 20 wt% at the time of eating or drinking can be used. It is preferably not less than 10 ppb and not more than 5 wt%, more preferably not less than 100 ppb and not more than 1 wt%, more preferably not less than 100 ppb and not more than 10 ppm. When the concentration is too low, the effect cannot be obtained, and when the concentration is too high, the food becomes unnatural and an artificial flavor is unpreferably added.

The present invention is explained in more detail in the following by referring to Examples, which are not to be construed as limitative.

### [Examples]

### (Example 1: evaluation of methional concentration by changes of reaction pH)

Methionine (0.4 g), xylose (0.44 g) and sodium chloride (3.79 g) were mixed and dissolved in water (19.16 g), adjusted to pH 4.5 - 7.5, and heated at 95°C for 1 hr. Furthermore, each reaction mixture was adjusted to pH 4.5 - 7.5, and heated at 95°C for 1 hr to give a methional solution. The same solution was heated at 95°C for 2 hr at fixed pH 6.0 and used as a control.

### (evaluation method of methional)

### <analysis instrument>

GC-MS; GC-MS(5973N) manufactured by Agilent
Auto sampler (pre-treatment, injecting apparatus); MPS2

### GESTEL

### <analysis pre-treatment>

A sample (10 ml) was placed in a 40 ml vial bottle with septum, and SPME fiber (65 µm polydimethylsiloxane-divinylbenzene) was exposed to the headspace for 45 min while heating at 50°C to allow adsorption of the component.

### <GC-MS conditions>

column TC-5 (0.25 mm×60M, ID=0.25 µm) manufactured by GL Sciences Inc.
   injecting conditions temperature; 200°C, mode; splitless, head pressure; 127 kPa
   oven conditions after maintenance at 50°C for 5 min, temperature rise to 220°C at 4°C/min, and maintenance at 220°C for 5 min.
   Flavor analysis was performed by the above-mentioned method. The results are shown in Table 1.

**[Table 1]**

| Methional concentration | | |
|---|---|---|
| pH in the first stage | pH in the second stage | Methional concentration (ppm) |
| 4.5 | 4.5 | 54 |
| 4.5 | 5.5 | 120 |
| 4.5 | 6.5 | 118 |
| 4.5 | 7.5 | 63 |
| 5.5 | 4.5 | 131 |
| 5.5 | 5.5 | 68 |
| 5.5 | 6.5 | 127 |
| 5.5 | 7.5 | 64 |
| 6.5 | 4.5 | 147 |
| 6.5 | 5.5 | 134 |
| 6.5 | 6.5 | 76 |
| 6.5 | 7.5 | 56 |
| 7.5 | 4.5 | 186 |
| 7.5 | 5.5 | 170 |
| 7.5 | 6.5 | 143 |
| 7.5 | 7.5 | 58 |
| control (pH 6.0) | | 116 |

From the results of Table 1, the production amount of methional was the highest in the system wherein the pH in the first stage was set to 7.5 and the pH in the second stage was set to 4.5, and was about 1.6 times that of the control. In addition, the production amount of methional preferably increased in the system wherein the pHs of the first stage and the second stage were changed (pH in the first stage, not less than 4.0 and not more than 8.0, pH in the second stage, not less than 3.0 and not more than 7.0) as compared to the control and the system using the same pH in the first stage and the second stage. Moreover, the production amount of methional preferably further increased in the system wherein the pHs of the first stage and the second stage were changed (pH in the first stage, not less than 4.5 and not more than 7.5, pH in the second stage, not less than 4.5 and not more than 6.5).

### (Example 2: evaluation of methional concentration change by addition of one kind of salt)

Methionine (0.4 g) and xylose (0.36) were dissolved in water (19.24 g), any one kind of sodium chloride, potassium chloride, calcium chloride, magnesium chloride, iron chloride, sodium carbonate, sodium dihydrogen phosphate and trisodium citrate was added (0.065 mol) and dissolved therein, and the mixture was heated at 95°C for 2 hr. The solution containing only methionine, xylose and water was heated at 95°C for 2 hr and used as a control.

### (evaluation method of methional)

### <analysis instrument>

GC-MS; GC-MS(5973N) manufactured by Agilent
Auto sampler (pre-treatment, injecting apparatus); MPS2 GESTEL

### <analysis pre-treatment>

A sample (10 ml) was placed in a 40 ml vial bottle with septum, and SPME fiber (65 µm polydimethylsiloxane-divinylbenzene) was exposed to the headspace for 45 min while heating at 50°C to allow adsorption of the component.

### <GC-MS conditions>

column TC-5 (0.25 mm×60M, ID=0.25 µm) manufactured by GL Sciences Inc.
   injecting conditions temperature; 200°C, mode; splitless, head pressure; 127 kPa
   oven conditions after maintenance at 50°C for 5 min, temperature rise to 220°C at 4°C/min, and maintenance at 220°C for 5 min.
   Flavor analysis was performed by the above-mentioned method. The results are shown in Table 2.

**[Table 2]**

| Methional concentration | |
|---|---|
| | Methional concentration (ppm) |
| control | 79 |
| sodium chloride | 140 |
| potassium chloride | 134 |
| calcium chloride | 83 |
| magnesium chloride | 55 |
| iron chloride | 0 |
| sodium carbonate | 0 |
| sodium dihydrogen phosphate | 222 |
| trisodium citrate | 0 |

From the results of Table 2, it was clarified that the production amount of methional increased as compared to the control in the system wherein sodium chloride, potassium chloride, calcium chloride or sodium dihydrogen phosphate were added, and the production amount of methional decreased as compared to the control in the system wherein magnesium chloride, iron chloride or sodium carbonate were added.

### (Example 3: evaluation of methional concentration change by addition of two kinds of salts)

Methionine (40 g) and xylose (44 g) were mixed and dissolved in water (1916 g), adjusted to pH 7.5, and heated at 95°C for 1 hr. Sodium dihydrogen phosphate (78 g, 0.65 mol) and sodium chloride (379 g, 6.49 mol) were added to this solution and dissolved therein, and the mixture was adjusted to pH 4.5, and heated at 95°C for 1 hr to give a methional solution. The same solution without addition of sodium dihydrogen phosphate and sodium chloride was heated at 95°C for 2 hr at fixed pH 5.6 and used as a control.

### (evaluation method of methional)

### <analysis instrument>

GC-MS; GC-MS(5973N) manufactured by Agilent
Auto sampler (pre-treatment, injecting apparatus); MPS2 GESTEL

### <analysis pre-treatment>

A sample (10 ml) was placed in a 40 ml vial bottle with septum, and SPME fiber (65 µm polydimethylsiloxane-divinylbenzene) was exposed to the headspace for 45 min while heating at 50°C to allow adsorption of the component.

### <GC-MS conditions>

column TC-5 (0.25 mm×60M, ID=0.25 µm) manufactured by GL Sciences Inc.
injecting conditions temperature; 200°C, mode; splitless, head pressure; 127 kPa
oven conditions after maintenance at 50°C for 5 min, temperature rise to 220°C at 4°C/min, and maintenance at 220°C for 5 min.
Flavor analysis was performed by the above-mentioned method. The results are shown in Table 3.

**[Table 3]**

| Methional concentration | |
|---|---|
| | Methional concentration (ppm) |
| control | 79 |
| addition of sodium dihydrogen phosphate and sodium chloride | 356 |

From the results of Table 3, a methional concentration improving effect which was 4.5-fold higher than the control was obtained by adding a combination of sodium dihydrogen phosphate and sodium chloride before the second time heating and heating in the acidic range. Moreover, methional was produced in a high amount as compared to the addition of sodium dihydrogen phosphate or sodium chloride alone.

### [Industrial Applicability]

The present invention can provide a method of producing a flavor composition by utilizing a heating reaction of methionine and a sugar, which enables to contain methional at a higher concentration.

## Claims

1. A method of producing a flavor composition, comprising mixing methionine, a sugar and one or more substances selected from sodium chloride, potassium chloride, calcium chloride and sodium dihydrogen phosphate, and heating the mixture at not lower than 40°C and not higher than 180°C for not less than 15 min and within 10 hr at a pH of not less than 3 and not more than 8.

2. The production method according to claim 1, wherein the sugar is selected from the group consisting of glucose, xylose, sucrose, maltose and fructose.

3. A method of producing a flavor composition, comprising mixing methionine, a sugar and one or more substances selected from sodium chloride, potassium chloride, calcium chloride and sodium dihydrogen phosphate, and heating the mixture in two stages, wherein the mixture is heated in a first stage at not lower than 40°C and not higher than 180°C for not less than 15 min and not more than 10 hr at a pH of not less than 4.0 and not more than 8.0, and in a second stage at not lower than 40°C and not higher than 180°C for not less than 15 min and not more than 10 hr at a pH of not less than 3.0 and not more than 7.0, and the pH in the first stage is different from the pH in the second stage by not less than 0.5.

4. A method of producing a food, comprising adding a flavor composition obtained by the production method according to any one of claims 1 to 3 to a food.

5. The method according to claim 4, wherein the food is food or drink using a meat extract.

## Patentansprüche

1. Verfahren zum Herstellen einer Aromazusammensetzung, welches das Mischen von Methionin, einem Zucker und einer oder mehrerer unter Natriumchlorid, Kaliumchlorid, Kalziumchlorid und Natriumdihydrogenphosphat ausgewählten Substanzen und das Erhitzen des Gemisches bei nicht weniger als 40°C und nicht höher als 180°C während nicht weniger als 15 Minuten und innerhalb 10 Stunden bei einem pH-Wert von nicht weniger als 3 und nicht mehr als 8 umfasst.

2. Produktionsverfahren nach Anspruch 1, wobei der Zucker aus der aus Glucose, Xyllose, Saccharose, Maltose und Fruktose bestehenden Gruppe ausgewählt ist.

3. Verfahren zum Herstellen einer Aromazusammensetzung, welches das Mischen von Methionin, einem Zucker und einer oder mehrerer unter Natriumchlorid, Kaliumchlorid, Kalziumchlorid und Natriumdihydrogenphosphat ausgewählten Substanzen und das Erhitzen des Gemisches in zwei Stufen umfasst, wobei das Gemisch in einer ersten Stufe bei nicht mehr als 40°C und nicht höher als 180°C während nicht weniger als 15 Minuten und nicht mehr als 10 Stunden bei einem pH-Wert von nicht weniger als 4,0 und nicht mehr als 8,0 und in einer zweiten Stufe bei nicht weniger als 40°C und nicht mehr als 180°C während nicht weniger als 15 Minuten und nicht mehr als 10 Stunden bei einem pH-Wert von nicht weniger als 3,0 und nicht mehr als 7,0 erhitzt wird und der pH-Wert in der ersten Stufe sich von dem pH-Wert in der zweiten Stufe um nicht weniger als 0,5 unterscheidet.

4. Verfahren zum Herstellen eines Nahrungsmittels, welches das Zugeben einer durch das Produktionsverfahren nach einem der Ansprüche 1 bis 3 erhaltenen Aromazusammensetzung zu einem Nahrungsmittel umfasst.

5. Verfahren nach Anspruch 4, wobei das Nahrungsmittel ein Fleischextrakt verwendendes Nahrungsmittel oder Getränk ist.

## Revendications

1. Procédé pour produire une composition aromatisante, comprenant le mélange de méthionine, de sucre et d'une ou de plusieurs substances choisies parmi le chlorure de sodium, le chlorure de potassium, le chlorure de calcium et le dihydrogénophosphate de sodium, et le chauffage du mélange à au moins 40°C et pas plus de à 180°C pendant au moins 15 minutes et jusqu'à 10 heures à un pH d'au moins 3 et ne dépassant pas 8.

2. Procédé de production selon la revendication 1, dans lequel le sucre est choisi dans le groupe constitué du glucose, du xylose, du saccharose, du maltose et du fructose.

3. Procédé de production d'une composition aromatisante, comprenant le mélange de méthionine, de sucre et d'une ou de plusieurs substances choisies parmi le chlorure de sodium, le chlorure de potassium, le chlorure de calcium et le dihydrogénophosphate de sodium, et le chauffage en deux étapes du mélange, le mélange étant chauffé pendant la première étape à au moins 40°C et pas plus de 180°C pendant au moins 15 minutes et jusqu'à 10 heures à un pH d'au moins 4,0 et ne dépassant pas 8,0, et pendant la seconde étape à au moins 40°C et pas plus de 180°C pendant au moins 15 minutes et jusqu'à 10 heures à un pH d'au moins 3,0 et ne dépassant pas 7,0, et le pH à la première étape variant d'au moins 0,5 par rapport au pH à la seconde étape.

4. Procédé de production d'un aliment, comprenant l'ajout à un aliment d'une composition aromatisante obtenue par le procédé de production selon l'une quelconque des revendications 1 à 3.

5. Procédé selon la revendication 4, dans lequel l'aliment est un produit alimentaire ou une boisson utilisant un extrait de viande.
